# EUROPÄISCHE PATENTSCHRIFT

(11) **EP 1 378 382 B1**
(45) Veröffentlichungstag und Bekanntmachung des Hinweises auf die Patenterteilung: **01.03.2006**
(21) Anmeldenummer: 02100775.2
(22) Anmeldetag: 02.07.2002
(51) Int. Cl.: B60G 11/08, B60G 11/44, F16F 1/368

(54) **Radaufhängung für ein Kraftfahrzeug mit einer Querblattfeder**
Wheel suspension for a vehicle with a transverse leaf spring
Suspension de roue pour véhicule du type à ressort à lame transversale

(43) Veröffentlichungstag der Anmeldung: 07.01.2004
(73) Patentinhaber: Ford Global Technologies, LLC, Dearborn, Michigan 48126 (US)
(72) Erfinder: Zandbergen, Paul, 6291 BX Vaals (NL); Chambers, Shawn, Cambridgeshire CB3 7XU (GB)
(74) Vertreter: Drömer, Hans-Carsten

(56) Entgegenhaltungen:
- EP-A- 0 243 102
- EP-A- 0 318 753
- EP-A- 0 507 975
- EP-A- 1 080 953
- DE-A- 3 612 777
- GB-A- 2 111 922
- US-A- 3 831 966
- US-A- 4 725 074
- US-A1- 2002 000 703
- US-B1- 6 398 451
- PATENT ABSTRACTS OF JAPAN vol. 014, no. 339 (M-1001), 23. Juli 1990 (1990-07-23) & JP 02 117408 A (MAZDA MOTOR CORP), 1. Mai 1990 (1990-05-01)

## Beschreibung

Die Erfindung betrifft eine Radaufhängung für ein Kraftfahrzeug mit einer quer zum Fahrzeug angeordneten Querblattfeder, die über mindestens ein Querblattfederlager mit dem Kraftfahrzeugaufbau verbunden und an mindestens einem Radträger angelenkt ist.

Eine Radaufhängung der eingangs genannten Art ist aus der EP 1 080 953 A1 bekannt, wobei die dort beschriebene Querblattfeder relativ zur Fahrzeuglängsmittenebene symmetrisch geformt und beidseitig gelagert sowie an beiden Enden über Federarme abgestützt ist. Die Querblattfeder ersetzt bei dieser Anordnung die bei herkömmlichen Radaufhängungen vorhandene Schraubenfeder sowie den Stabilisator und weitere Lenkerarme. Problematisch bei diesem und ähnlichen Ansätzen ist jedoch, daß die in vertikaler Richtung erfolgende Bewegung des Ein- oder Ausfedems der Räder zu einer erheblichen Änderung der Spurweite führt, welche wiederum in einer unerwünschten Änderung der Vorspur resultiert. Weiterhin bleibt bei den bekannten Systemen offen, wie die Stabitisatorfunktion ohne Nachteile bezüglich der Rollrate vollständig integriert werden soll.

Aus der EP 243 102 A1 ist ebenfalls eine Radaufhängung für ein Kraftfahrzeug bekannt, welche eine die Radträger verbindende Querblattfeder aufweist. Um Platz für Fahrzeugkomponenten wie etwa Teile des Motors oder des Getriebes zu schaffen, weist die Querblattfeder einen mittleren Bereich auf, welcher über Bögen in Fahrzeuglängsrichtung parallel versetzt angeordnet ist, wobei der mittlere Bereich und die Bögen einen flachen Querschnitt haben.

Des Weiteren beschreibt auch die EP 318 753 A1 eine Radaufhängung mit einer über ihre gesamte Länge flachen Querblattfeder, welche gekrümmt ausgebildet ist, um Platz für Motorkomponenten oder dergleichen zu schaffen.

Vor diesem Hintergrund war es Aufgabe der vorliegenden Erfindung, eine verbesserte Radaufhängung mit einer Querblattfeder bereitzustellen, die bei geringem Gewicht und ohne Nachteile hinsichtlich der Kinematik und der Rollrate die Funktionen der Federung, verschiedener Lenker und vorzugsweise auch des Stabilisatorsystems integriert.

Diese Aufgabe wird durch eine Radaufhängung mit den Merkmalen des Anspruchs 1 gelöst.

Vorteilhafte Ausgestaltungen sind in den Unteransprüchen enthalten.

Die erfindungsgemäße Radaufhängung für ein Kraftfahrzeug weist eine radführende und im Wesentlichen quer zum Fahrzeug angeordnete Querblattfeder auf, die über mindestens ein zugehöriges Querblattfederlager mit dem Kraftfahrzeugaufbau verbunden sowie an mindestens einem Radträger (Achsschenkel) des Rades angelenkt ist. Die Radaufhängung ist dadurch gekennzeichnet, daß die Querblattfeder (mindestens) zwei im Wesentlichen gerade Abschnitte aufweist, die über einen Bogen verbunden sind. Vorzugsweise beschreibt der Bogen dabei unter einer verhältnismäßig scharfen Krümmung einen Winkel zwischen ca. 60° bis ca. 120°.

Durch die mit einem Bogen beziehungsweise einer Biegung versehene Form der Querblattfeder wird ein erheblich verbessertes Fahrverhalten erzielt, da die bei einem Ein- und Ausfedern der Räder stattfindenden Biegungen der Querblattfeder zu verringerten Änderungen der Spurweite führen. Aufgrund der reduzierten lateralen Bewegung der Räder können dann die Querblattfederlager mit einer größeren lateralen Steifigkeit ausgebildet werden, so daß die gesamte Radaufhängung vorteilhafterweise eine hohe laterale Steifigkeit erhält.

Die Querblattfeder weist zusätzlich zum ersten Bogen einen zweiten, entgegengesetzt zum ersten Bogen gekrümmten Bogen auf. Beide Bögen zusammen führen somit zu einer Z-Form der Querblattfeder, die einen stufenförmigen Versatz aufweist. Die zueinander versetzten parallelen Abschnitte der Querblattfeder können dabei insbesondere quer zur Fahrzeuglängsachse angeordnet werden.

Besonders bevorzugt ist es, wenn die Querblattfeder die beiden Räder einer Achse verbindet und zu diesem Zweck an ihren beiden Enden an je einem Radträger angelenkt ist. In diesem Falle karin die Querblattfeder zusätzlich die Funktion eines Stabilisators übernehmen, d.h. ein einseitig stattfindendes Ein- oder Ausfedem eines Rades auf das gegenüberliegende Rad übertragen. Eine derartige Querblattfeder ist vorzugsweise symmetrisch zu ihrem Mittelpunkt beziehungsweise zur Fahrzeugmitte geformt, so daß diese zu beiden Rädern hin die gleichen dynamischen Eigenschaften besitzt.

Des Weiteren ist die Querblattfeder entlang ihrer Erstreckung ungleichförmig ausgebildet, so daß verschiedene Bereiche verschiedene elastische Eigenschaften aufweisen. Insbesondere ist dabei ein mittlerer Bereich der Querblattfeder flach ausgebildet (zum Beispiel mit einem flach rechteckigen Querschnitt), während mindestens ein radseitiger Endbereich der Querblattfeder einen kompakten, vorzugsweise quadratischen oder runden bzw. kreisförmigen Querschnitt aufweist. Der mittlere Bereich besitzt dann eine hohe Biegsamkeit in einer Richtung, so daß dieser gut die Funktionen einer Feder und eines Stabilisators übernehmen kann. Der Endbereich kann dagegen für alle Belastungsrichtungen steif ausgebildet sein, um so die Bremskräfte und lateralen Kräfte aufnehmen zu können. Er kann aber auch auf Torsion beansprucht werden und somit die Funktion des Stabilisators übernehmen.

Zur Herstellung der Querblattfeder können alle Materialien mit entsprechenden elastischen Eigenschaften und Haltbarkeiten ausgewählt werden. Vorzugsweise wird die Querblattfeder aus in Epoxidharz eingebetteten Glasfasern hergestellt.

Bestimmte Abschnitte der Querblattfeder, insbesondere auf Torsion beanspruchte Bereiche, können vorteilhafterweise durch unter einem Winkel um einen Kern gewundene Fasern verstärkt werden.

Gemäß einer Weiterbildung der Radaufhängung ist vorzugsweise ein radseitiges Ende der Querblattfeder mit mindestens einem Längslenker gekoppelt, welcher seinerseits am Kraftfahrzeugaufbau gelagert ist. Durch den Längslenker erfolgt eine Kraftübertragung zwischen Rad und Fahrzeugaufbau in Längsrichtung des Fahrzeugs.

Weiterhin können die Radträger zusätzlich über mindestens einen Dreiecksquerlenker und/oder über ein Dämpferbein am Kraftfahrzeugaufbau gelagert sein. Diese Lagerungen dienen insbesondere der Übertragung von in vertikaler Richtung wirkenden Lasten zwischen Rädern und Fahrzeugaufbau.

Eine andere Weiterentwicklung betrifft eine spezielle Ausgestaltung der Querblattfederlager, wobei derartige Lager nicht nur bei Radaufhängungen gemäß der vorliegenden Erfindung, sondern auch bei anderen Typen von Radaufhängungen (mit oder ohne Querblattfeder) vorteilhaft eingesetzt werden können. Die erfindungsgemäßen Querblattfederlager weisen eine die Querblattfeder umschließende Verdickung auf, wobei die (in Bezug auf die Achse der Querblattfeder) axialen Enden der Verdickung aus im Wesentlichen ebenen Flächenstücken bestehen. Die genannten Flächenstücke sind dabei unter einem verhältnismäßig steilen Winkel von typischerweise 45° bis 90° relativ zur Achse der Querblattfeder geneigt. Hierdurch wird eine hohe laterale Steifigkeit des Querblattfederlagers erreicht. Eine leichte Neigung der Flächenstücke gegenüber einer zur Achse senkrechten Stellung (Winkel 90°) ist dabei hinsichtlich des Zusammenbaus des Lagers von Vorteil.

Die vorstehend genannten Verdickungen bestehen vorzugsweise aus einem Kunststoff entsprechender Stabilität, welcher die auftretenden Kraftbelastungen aufnehmen kann. Vorteilhafterweise sind die Verdickungen mit der Querblattfeder durch Kraftschluß, Stoffschluß und/oder Formschluß verbunden.

Gemäß einer Weiterbildung des Querblattfederlagers wird die genannte Verdikkung von einem Mantel aus einem elastischen Material - wie insbesondere Gummi - umgeben, wobei der Mantel seinerseits von einer Gehäuseschale gefaßt ist. Die vorzugsweise aus Metall bestehende Gehäuseschale kann mit dem Fahrzeugaufbau fest verbunden werden, wobei das zwischen der Gehäuseschale und der Verdickung gelegene Gummi aufgrund seiner elastischen Eigenschaften für die gewünschte Flexibilität des Querblattfederlagers sorgt. Das Ausmaß dieser Flexibilität kann durch die Materialwahl und die Dimensionierung nach Wunsch eingestellt werden.

Im Folgenden wird die Erfindung anhand der Figuren beispielhaft näher erläutert. Es zeigen:
- Fig. 1: eine Frontansicht einer erfindungsgemäßen Radaufhängung der Vorderräder eines Kraftfahrzeuges;
- Fig. 2: eine Draufsicht der Radaufhängung nach Figur 1;
- Fig. 3: einen Schnitt in Längsrichtung der Querblattfeder (Linie III-III von Figur 4) durch ein erfindungsgemäßes Querblattfederlager, und
- Fig. 4: einen Schnitt quer zur Querblattfeder (Linie IV-IV von Figur 3) durch das Lager nach Figur 3.

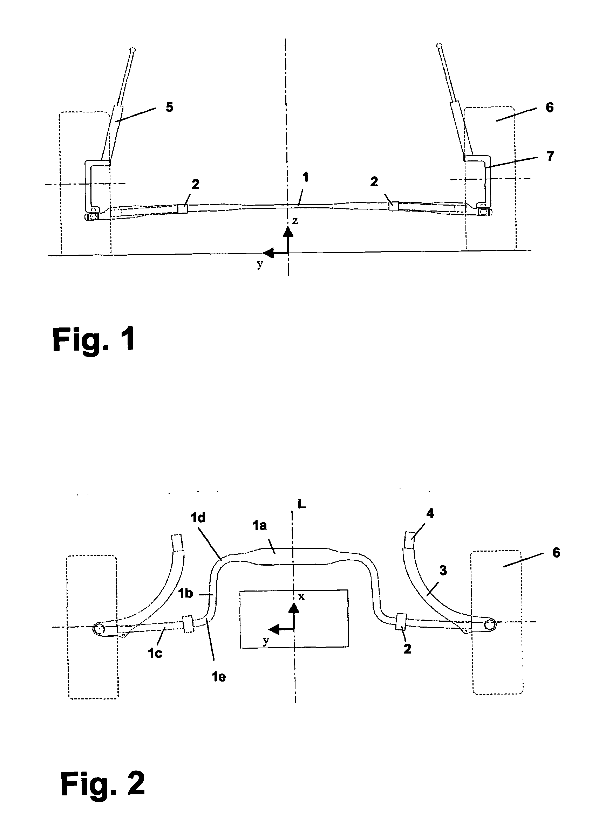

Die Figuren 1 und 2 zeigen zwei verschiedene Ansichten einer erfindungsgemäßen Radaufhängung am Beispiel der Vorderräder, wobei die Radaufhängung jedoch in analoger Weise auch bei den Hinterrädern implementiert werden kann.

Zentrales Element der Radaufhängung ist eine Querblattfeder 1, die sich quer zur in x-Richtung weisenden Fahrzeuglängsachse L zwischen den beiden Rädern 6 erstreckt und mit ihren Enden an den Radträgern 7 angelenkt ist. Wie in der Frontansicht von Figur 1 erkennbar ist, erstreckt sich die Querbiattfeder 1 in einer zur Fahrbahn parallelen Ebene mit einer leichten Wölbung nach oben.

Das Besondere an der Querblattfeder 1 besteht gemäß der Draufsicht von Figur 2 darin, daß diese beiderseits eines mittleren Bereiches 1a Bögen 1d von ca. 90° aufweist, welche den mittleren Bereich 1a mit in Richtung der Fahrzeugachse L verlaufenden Torsionsabschnitten 1b verbinden. Die Torsionsabschnitte 1b sind ihrerseits über jeweils eine zweiten ca. 90° Bogen 1e mit Endabschnitten 1c der Querblattfeder verbunden, so daß die Endabschnitte 1c wieder im Wesentlichen quer zur Fahrzeuglängsachse L und damit parallel zum mittleren Abschnitt 1a verlaufen. Die zur Fahrzeugmittenebene symmetrisch ausgebildete Querblattfeder 1 ist somit durch einen zur Radachse parallel versetzten Mittenbereich 1a gekennzeichnet.

Die Querblattfeder 1 ist über zwei Querblattfederlager 2 mit Querträgern (nicht dargestellt) und damit mit dem Fahrzeugaufbau verbunden.

Wenn die beiden Räder 6 in Phase ein- beziehungsweise ausfedern (d.h. in vertikaler z-Richtung ausgelenkt werden), wird die Querblattfeder 1 insbesondere in ihrem mittleren Bereich 1a auf Biegung beansprucht, wodurch diese wie eine vertikale Federung wirkt. Wenn die beiden Räder 6 in Gegenphase ein- beziehungsweise ausfedern, wird die Querblattfeder 1 auf Biegung und Torsion beansprucht, wodurch diese die Funktion eines Stabilisators übernimmt, welcher die beiden Räder 6 miteinander koppelt.

Von herkömmlichen, im Wesentlichen gerade von einem Rad zum anderen verlaufenden Querblattfedern ist es bekannt, daß diese bei einer vertikalen Bewegung der Räder 6 zu einer verhältnismäßig großen Spurweitenänderung führen. Dies resultiert daraus, daß bei einer Biegung der Querblattfeder die notwendige Verlängerung im Mittenbereich durch ein Einwärtsziehen der Endabschnitte kompensiert wird. Aufgrund der direkten Kopplung der Querblattfeder an die Räder führt dies bei herkömmlichen, geraden Querblattfedern zur erwähnten Änderung der Spurweite und damit zur Erzeugung einer unerwünschten Änderung der Vorspur.

Eine derartige Wirkung wird bei der erfindungsgemäßen Formgebung der Querblattfeder 1 verhindert. Der durch die Bögen 1d, 1e versetzt angeordnete mittlere Bereich 1a der Querblattfeder kann bei seiner Biegung die angrenzenden Torsionsabschnitte 1b nach innen ziehen, ohne daß sich dies zwangsläufig auf die Endabschnitte 1c der Querblattfeder überträgt. Die benötigte Verlängerung im Mittenbereich 1a kann nämlich durch eine entsprechende Streckung der Bögen 1d, 1e bereitgestellt werden, so daß die Bewegungen der Endabschnitte 1c minimiert werden. Dementsprechend verringern sich die Auswirkungen auf die Spurbreite und die Vorspur auf ein von herkömmlichen Radaufhängungen (ohne Querblattfeder) bekanntes Ausmaß. Dies bedeutet wiederum, daß die Querblattfederlager 2 eine sehr hohe laterale Steifigkeit besitzen können, welche zur Erzielung der wünschenswerten hohen lateralen Steifigkeit der gesamten Radaufhängung führt.

Ein weiterer Vorteil der gekrümmten Form der Querblattfeder 1 besteht darin, daß bei Verwendung an der Vorderachse Platz für die Unterbringung des Motors, des Getriebes, der Lenkstange od. dgl. geschaffen wird.

Die Querblattfeder 1 kann insbesondere aus Glasfasern in Epoxidharz hergestellt werden. Die Querschnittfläche der Querblattfeder 1 ist dabei im Wesentlichen konstant, wenn die Querblattfeder 1 aus einem durchgehenden unidirektionalen Faserbündel hergestellt wird. Um unter diesen Bedingungen die Biegesteifigkeit entlang der Querblattfeder 1 lokal verschieden zu gestalten, können verschiedene Querschnittsformen - insbesondere verschiedene Verhältnisse von Höhe zu Breite - eingestellt werden.

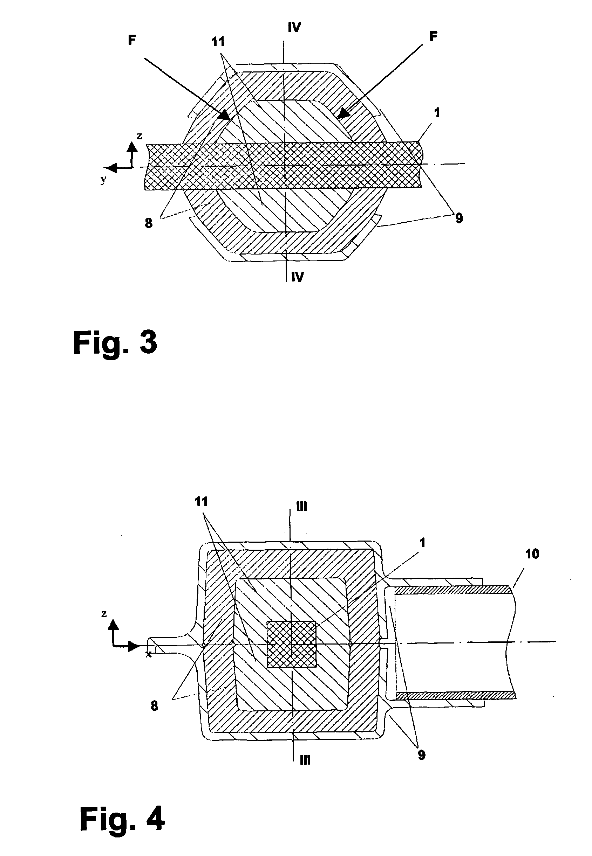

Zur Integration der Stabilisatorfunktion in die Querblattfeder ist es diesbezüglich erforderlich, daß der Mittenabschnitt 1a der Querblattfeder eine erheblich geringere Biegesteifigkeit in z-Richtung als die Enden aufweist. Aus diesem Grunde ist der Mittenbereich 1a mit geringer Höhe (gemessen in z-Richtung senkrecht zur Fahrbahn) und großer Breite (gemessen in x-Richtung) ausgebildet, während die Torsionsabschnitte 1b sowie die Endabschnitte 1c im Wesentlichen eine quadratische Querschnittsfläche haben (vgl. Figur 4). Die Torsionsabschnitte 1b können dabei durch Fasern verstärkt werden, die unter einem bestimmten Winkel um den unidirektionalen Kern gewunden sind.

Wie aus Figur 2 erkennbar ist, ist an den Enden der Querblattfeder 1 als Längslenker eine Druckstange 3 mittels einer in diese Stange integrierten Klammer angekoppelt. Im Falle einer Radaufhängung mit einem Anbringungspunkt vor dem Rad 6 ist die entsprechende Stange eine Zugstange. Hierbei handelt es sich um eine typische Anwendung für Hinterradaufhängungen und bestimmte Vorderradaufhängungen.

Das andere Ende der Druckstange 3 weist eine Lagerhülse auf, die an einem Querträger 4 angebracht ist. Die Druckstange 3 und die Lagerhülse übernehmen die Funktionen, die in Längsrichtung weisende Radlast zu absorbieren, die Nachgiebigkeit der Radaufhängung in Längsrichtung zu kontrollieren und die Kinematik der Radaufhängung zu steuern ("anti-dive"). Weiterhin ist ein Kugelgelenk in die Druckstange 3 integriert, so daß diese mit dem Radträger ("wheel knuckle") verbunden werden kann.

Die verbleibende Radabstützung wird durch das in Figur 1 erkennbare Dämpferbein 5 bereitgestellt, welches an seiner Oberseite am Fahrzeugaufbau angelenkt ist. Alternativ kann die erfindungsgemäße Querblattfeder 1 jedoch z.B. auch in einer Radaufhängung mit einem doppelten Dreiecksquerlenker eingesetzt werden.

Die Figuren 3 und 4 zeigen zwei zueinander senkrechte Schnitte durch die Querblattfederlager 2, mit denen die Querblattfeder 1 am Fahrzeugaufbau abgestützt ist. Das Lager weist einen mehrschaligen Aufbau auf, dessen Kern durch eine die Querblattfeder 1, die in diesem Bereich einen quadratischen Querschnitt hat, umgebende Verdickung 11 gebildet wird. Die Verdickung 11 besteht aus zwei spiegelsymmetrischen Teilen, die vorzugsweise durch Stoffschluß (z.B. durch Aufspritzen oder Angießen) mit der Querblattfeder 1 verbunden sind. Die Verdickungen 11 können aus einem Kunststoff bestehen, welcher fest genug ist, um die wirkenden vertikalen und transversalen Lasten aufzunehmen. Die beiden Hälften der Verdickung 11 weisen sowohl im Längsschnitt (Figur 3) als auch im Querschnitt (Figur 4) eine Trapezform auf, wobei die axialen Enden der Verdickungen 11 durch zur Achse der Querblattfeder 1 geneigte Flächenstücke F gebildet werden. Die laterale Abstützung (in y-Richtung) derartiger Flächenstücke ist größer als sie es bei einer zum Beispiel kugelförmigen Verdickung wäre. Auf diese Weise gewährleistet die Trapezform der Verdickung 11, daß eine laterale Abstützung über die gesamte Bewegung des Eindrückens und Rückfederns der Querblattfeder 1 zur Verfügung steht.

Die Kunststoffverdickung 11 ist weiterhin von einem Gummimantel 8 umgeben, welcher an eine obere und untere Gehäuseschale 9 gebunden ist. Die beiden Schalen 9 klemmen das Gummi 8 zwischen sich ein und sind am Querträger 10 des Fahrzeugaufbaus befestigt.

Die Trapezform der Verdickung 11 trägt zusätzlich dazu bei, daß das Gummi 8 besser an seinem Platz gehalten wird. Auf diese Weise wird eine Gleitbewegung zwischen der Verdickung 11 und dem Gummi 8 sowie zwischen dem Gummi 8 und den Gehäuseteilen 9 verhindert, wodurch die Hysterese der Radaufhängung minimiert wird. Anstelle der Trapezform von Verdickung 11 und Gummimantel 8 könnte auch eine rechteckige Form dieser Teile gewählt werden. In diesem Falle wäre das Lager allerdings schwieriger zu montieren, so daß vorteilhafterweise die in den Figuren 3 und 4 dargestellten kleinen Winkel der Seitenwände F der Verdickung 11 relativ zu einer Vertikalen der Querblattfeder 1 vorgesehen werden.

Das Verhalten des Querblattlagers 2 kann durch die Größe und Form der Verdikkungen 11 und durch die Eigenschaften des Gummis 8 eingestellt werden. Durch Leerräume im Gummi 8 kann ein nichtlineares Verhalten bereitgestellt werden. Die Belastungen der Lager bestimmen die notwendige Menge an Gummi 8 zur Erzielung einer langlebigen Konstruktion.

Die Querblattfederlager 2 stehen unter einer konstanten Vorspannung, da der Pfad der statischen Belastung zwischen dem Fahrzeugkörper und dem Boden über diese Lager verläuft. Aus diesem Grunde wird vorzugsweise mehr Gummi 8 an der Oberseite der Querblattfeder 1 als an der Unterseite vorgesehen

Die beschriebenen Lager 2 eignen sich selbstverständlich auch zur Aufnahme von anderen Lenkern oder dergleichen anstelle der Querblattfeder 1.

Bei der vorstehend beschriebenen Radaufhängung wird eine Integration der Funktionen von Federung, Stabilisator und lateraler Radabstützung in einer flexiblen Querträgerfeder erreicht, ohne daß Abstriche hinsichtlich der Kinematik und der Nachgiebigkeit gegenüber herkömmlichen Radaufhängungen in Kauf genommen werden müßten.

## Patentansprüche

1. Radaufhängung für ein Kraftfahrzeug mit einer quer zum Fahrzeug angeordneten Querblattfeder (1), die über mindestens ein Querblattfederlager (2) mit dem Kraftfahrzeugaufbau verbunden und an mindestens einem Radträger (7) angelenkt ist, wobei die Querblattfeder (1) einen mittleren Bereich (1a) mit einem flachen Querschnitt aufweist, der über entgegengesetzt gekrümmte Bögen (1d, 1e) in Fahrzeuglängsrichtung gegenüber den radseitigen Endbereichen (1c) der Querblattfeder (1) versetzt angeordnet ist,
**dadurch gekennzeichnet, daß**
die Querblattfeder (1) in den Endbereichen (1c) und in den Bögen (1d, 1e) einen kompakten Querschnitt aufweist.

2. Radaufhängung nach Anspruch 1,
**dadurch gekennzeichnet, daß**
die Querblattfeder (1) in den Endbereichen (1c) und in den Bögen (1d, 1e) einen quadratischen Querschnitt aufweist.

3. Radaufhängung nach Anspruch 1,
**dadurch gekennzeichnet, daß**
die Querblattfeder (1) in den Endbereichen (1c) und in den Bögen (1d, 1e) einen runden Querschnitt aufweist.

4. Radaufhängung nach mindestens einem der Ansprüche 1 bis 3,
**dadurch gekennzeichnet, daß**
die Querblattfeder (1) an beiden Enden an je einem Radträger (7) angelenkt und vorzugsweise symmetrisch zur Fahrzeugmitte ausgebildet ist.

5. Radaufhängung nach mindestens einem der Ansprüche 1 bis 4,
**dadurch gekennzeichnet, daß**
die Gluerblattfeder (1) aus in Epoxidharz eingebetteten Glasfasern besteht.

6. Radaufhängung nach mindestens einem der Ansprüche 1 bis 5,
**dadurch gekennzeichnet, daß**
zumindest ein Abschnitt (1b) der Querblattfeder (1) durch um einen Kern gewundene Fasern verstärkt ist.

7. Radaufhängung nach mindestens einem der Ansprüche 1 bis 6,
**dadurch gekennzeichnet, daß**
diese mit einem am Kraftfahrzeugaufbau gelagerten Längslenker (3) gekoppelt ist.

8. Radaufhängung nach mindestens einem der Ansprüche 1 bis 7,
**dadurch gekennzeichnet, daß**
die Radträger (7) über mindestens einen Dreiecksquerlenker und/oder ein Dämpferbein (5) am Kraftfahrzeugaufbau gelagert sind.

9. Radaufhängung nach mindestens einem der Ansprüche 1 bis 8,
**dadurch gekennzeichnet, daß**
das Querblattfederlager (2) eine die Querblattfeder (1) umschließende Verdickung (11) aufweist, deren axiale Enden aus ebenen Flächenstücken (F) bestehen.

10. Radaufhängung nach Anspruch 9,
**dadurch gekennzeichnet, daß**
die Verdickung (11) von einem Mantel (8) aus elastischem Material, vorzugsweise aus Gummi, umgeben ist, welcher in einer Gehäuseschale (9) gefasst ist.

## Claims

1. Wheel suspension for a motor vehicle with a transverse leaf spring (1) which is arranged transversely to the vehicle and which is connected to the vehicle body via at least one transverse leaf spring bearing (2) and is articulated on at least one wheel carrier (7), the transverse leaf spring (1) having a middle region (1a) with a flat cross section, which is arranged so as to be offset with respect to the wheel-side end regions (1c) of the transverse leaf spring (1) in the vehicle longitudinal direction via arcs (1d, 1e) curved in opposite directions,
**characterized in that**
the transverse leaf spring (1) has a compact cross section in the end regions (1c) and in the arcs (1d, 1e).

2. Wheel suspension according to Claim 1,
**characterized in that**
the transverse leaf spring (1) has a square cross section in the end regions (1c) and in the arcs (1d, 1e).

3. Wheel suspension according to Claim 1,
**characterized in that**
the transverse leaf spring (1) has a round cross section in the end regions (1c) and in the arcs (1d, 1e).

4. Wheel suspension according to at least one of Claims 1 to 3,
**characterized in that**
the transverse leaf spring (1) is articulated at each of the two ends on a wheel carrier (7) and is preferably designed symmetrically to the vehicle centre.

5. Wheel suspension according to at least one of Claims 1 to 4,
**characterized in that**
the transverse leaf spring (1) consists of glass fibres embedded in epoxy resin.

6. Wheel suspension according to at least one of Claims 1 to 5,
**characterized in that**
at least one portion (1b) of the transverse leaf spring (1) is reinforced by means of fibres wound around a core.

7. Wheel suspension according to at least one of Claims 1 to 6,
**characterized in that**
the latter is coupled to a longitudinal link (3) mounted on the motor vehicle body.

8. Wheel suspension according to at least one of Claims 1 to 7,
**characterized in that**
the wheel carriers (7) are mounted on the motor vehicle body via at least one A-frame arm and/or a damper strut (5).

9. Wheel suspension according to at least one of Claims 1 to 8,
**characterized in that**
the transverse leaf spring bearing (2) has a thickening (11) which surrounds the transverse leaf spring (1) and the axial ends of which consist of planar surface pieces (F).

10. Wheel suspension according to Claim 9,
**characterized in that**
the thickening (11) is surrounded by a casing (8) consisting of elastic material, preferably of rubber, which is framed in a housing shell (9).

## Revendications

1. Suspension de roue pour un véhicule automobile avec un ressort à lame transversale (1) disposé transversalement par rapport au véhicule, qui est connectée à la carrosserie du véhicule et articulée à au moins un support de roue (7), le ressort à lame transversale (1) présentant une région centrale (1a) avec une section transversale plate qui est disposée de manière décalée par rapport aux régions d'extrémité (1c) côté roue du ressort à lame transversale (1) par le biais d'arcs de courbure opposée (1d, 1e) dans la direction longitudinale du véhicule,
**caractérisée en ce que**
le ressort à lame transversale (1) présente, dans les régions d'extrémité (1c) et dans les arcs (1d, 1e), une section transversale compacte.

2. Suspension de roue selon la revendication 1,
**caractérisée en ce que**
le ressort à lame transversale (1) présente une section transversale carrée dans les régions d'extrémité (1c) et dans les arcs (1d, 1e).

3. Suspension de roue selon la revendication 1,
**caractérisée en ce que**
le ressort à lame transversale (1) présente une section transversale ronde dans les régions d'extrémité (1c) et dans les arcs (1d, 1e).

4. Suspension de roue selon l'une quelconque des revendications 1 à 3,
**caractérisée en ce que**
le ressort à lame transversale (1) est articulé aux deux extrémités à un support de roue respectif (7) et est réalisé de préférence de manière symétrique par rapport au centre du véhicule.

5. Suspension de roue selon l'une quelconque des revendications 1 à 4,
**caractérisée en ce que**
le ressort à lame transversale (1) se compose de fibres de verre noyées dans de la résine époxy.

6. Suspension de roue selon l'une quelconque des revendications 1 à 5,
**caractérisée en ce**
**qu'**au moins une portion (1b) du ressort à lame transversale (1) est renforcée par des fibres enroulées autour d'un noyau.

7. Suspension de roue selon l'une quelconque des revendications 1 à 6,
**caractérisée en ce que**
celle-ci est accouplée à un bras oscillant longitudinal (3) monté sur la carrosserie du véhicule.

8. Suspension de roue selon l'une quelconque des revendications 1 à 7,
**caractérisée en ce que**
les supports de roue (7) sont montés sur la carrosserie du véhicule par le biais d'au moins un bras oscillant transversal triangulaire et/ou d'une jambe d'amortisseur (5).

9. Suspension de roue selon l'une quelconque des revendications 1 à 8,
**caractérisée en ce que**
le palier du ressort à lame transversale (3) présente un épaississement (11) entourant le ressort à lame transversale (1), dont les extrémités axiales se composent de parties de surface planes (F).

10. Suspension de roue selon la revendication 9,
**caractérisée en ce que**
l'épaississement (11) est entouré par une enveloppe (8) en matériau élastique, de préférence en caoutchouc, qui est montée dans une coque de boîtier (9).
